(19) Europäisches Patentamt
European Patent Office
Office européen des brevets

(11) EP 2 985 316 A1

(12) **EUROPEAN PATENT APPLICATION**
published in accordance with Art. 153(4) EPC

(43) Date of publication:
**17.02.2016 Bulletin 2016/07**

(21) Application number: **14783034.3**

(22) Date of filing: **25.03.2014**

(51) Int Cl.:
***C08L 77/06*** *(2006.01)*

(86) International application number:
**PCT/JP2014/058366**

(87) International publication number:
**WO 2014/167997 (16.10.2014 Gazette 2014/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.04.2013 JP 2013081506**

(71) Applicant: **Mitsubishi Gas Chemical Company, Inc.**
**Tokyo 100-8324 (JP)**

(72) Inventors:
- **SATO, Kazuya**
  **Hiratsuka-shi**
  **Kanagawa 254-0016 (JP)**
- **KATO, Tomonori**
  **Hiratsuka-shi**
  **Kanagawa 254-0016 (JP)**
- **KIKUCHI, Mayumi**
  **Hiratsuka-shi**
  **Kanagawa 254-0016 (JP)**

(74) Representative: **Vossius & Partner**
**Patentanwälte Rechtsanwälte mbB**
**Siebertstrasse 3**
**81675 München (DE)**

# (54) POLYAMIDE RESIN COMPOSITION AND MOLDED ARTICLE USING SAME

(57) The present invention provides a polyamide resin composition containing a polyamide resin (A) in which a diamine constituent unit thereof includes a constituent unit derived from a xylylenediamine (a-1), and a dicarboxylic acid constituent unit thereof includes a constituent unit derived from an α,ω-linear aliphatic dicarboxylic acid (a-2) having from 4 to 20 carbon atoms; and a polyether polyamide (B) in which a diamine constituent unit thereof includes constituent units derived from a polyether diamine compound (b-1) represented by a specified structural formula and a xylylenediamine (b-2), and a dicarboxylic acid constituent unit thereof includes a constituent unit derived from an α,ω-linear aliphatic dicarboxylic acid (b-3) having from 4 to 20 carbon atoms.

EP 2 985 316 A1

## Description

Technical Field

The present invention relates to a polyamide resin composition and a molded article using the same, and in detail, it relates to a xylylene group-containing polyamide resin composition and a molded article using the same.

Background Art

A xylylene group-containing polyamide resin with high aromaticity is known as a polyamide resin with excellent rigidity. But, the polyamide resin with high aromaticity has such a drawback that its impact resistance is poor. As a method of improving this impact resistance, a resin composition in which a polyamide resin is blended with a maleic anhydride-modified polyolefin resin or the like is known (see JP-B-H06-045748).

Summary of Invention

Technical Problem

However, if a polyamide resin is blended with a maleic anhydride-modified polyolefin resin or the like, there is encountered such a problem that an elastic modulus is greatly lowered, so that the high rigidity which the polyamide resin originally has cannot be thoroughly kept.

A technical problem of the present invention is to provide a polyamide resin composition having a high elastic modulus and also having excellent impact resistance and a molded article using the same.

Solution to Problem

The present invention provides a polyamide resin composition and a molded article using the same as described below.

<1> A polyamide resin composition containing
a polyamide resin (A) in which a diamine constituent unit thereof includes a constituent unit derived from a xylylenediamine (a-1), and a dicarboxylic acid constituent unit thereof includes a constituent unit derived from an $\alpha,\omega$-linear aliphatic dicarboxylic acid (a-2) having from 4 to 20 carbon atoms; and
a polyether polyamide (B) in which a diamine constituent unit thereof includes constituent units derived from a polyether diamine compound (b-1) represented by the following general formula (1) and a xylylenediamine (b-2), and a dicarboxylic acid constituent unit thereof includes a constituent unit derived from an $\alpha,\omega$-linear aliphatic dicarboxylic acid (b-3) having from 4 to 20 carbon atoms:

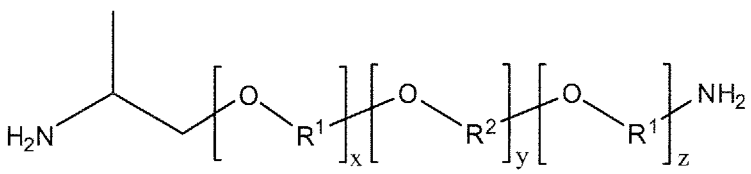

(1)

(In the formula, (x + z) represents 1 to 60; y represents 1 to 50; each $-OR^1-$ independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.)
<2> A molded article using the polyamide resin composition as set forth above in <1>.

Advantageous Effects of Invention

The polyamide resin composition and the molded article using the same according to the present invention have a high elastic modulus and also have excellent impact resistance, and are especially suitable for an injection molded article.

Description of Embodiments

A. Polyamide resin composition

The polyamide resin composition of the present invention contains a polyamide resin (A) in which a diamine constituent unit thereof includes a constituent unit derived from a xylylenediamine (a-1), and a dicarboxylic acid constituent unit thereof includes a constituent unit derived from an $\alpha,\omega$-linear aliphatic dicarboxylic acid (a-2) having from 4 to 20 carbon atoms; and a polyether polyamide (B) in which a diamine constituent unit thereof includes constituent units derived from a polyether diamine compound (b-1) represented by the foregoing general formula (1) and a xylylenediamine (b-2), and a dicarboxylic acid constituent unit thereof includes a constituent unit derived from an $\alpha,\omega$-linear aliphatic dicarboxylic acid (b-3) having from 4 to 20 carbon atoms.

1. Polyamide resin (A)

As for the polyamide resin (A) which is used in the present invention, a diamine constituent unit thereof includes a constituent unit derived from a xylylenediamine (a-1), and a dicarboxylic acid constituent unit thereof includes a constituent unit derived from an $\alpha,\omega$-linear aliphatic dicarboxylic acid (a-2) having from 4 to 20 carbon atoms. In view of the fact that the diamine constituent unit includes a constituent unit derived from a xylylenediamine, a high elastic modulus and excellent rigidity are revealed.

1-1. Diamine constituent unit

The diamine constituent unit of the polyamide resin (A) which is used in the present invention includes a constituent unit derived from a xylylenediamine (a-1). A content of the constituent unit derived from the xylylenediamine (a-1) in the diamine constituent unit of the polyamide resin (A) is preferably 70 to 100% by mole, more preferably 80 to 100% by mole, and still more preferably 90 to 100% by mole.

The xylylenediamine (a-1) is preferably m-xylylenediamine, p-xylylenediamine, or a mixture thereof, more preferably m-xylylenediamine or a mixture of m-xylylenediamine and p-xylylenediamine, and still more preferably a mixture of m-xylylenediamine and p-xylylenediamine.

In the case where the xylylenediamine (a-1) is derived from m-xylylenediamine, the resulting polyether polyamide resin composition is excellent in terms of flexibility, crystallinity, melt moldability, molding processability, and toughness.

In the case where the xylylenediamine (a-1) is derived from a mixture of m-xylylenediamine and p-xylylenediamine, the resulting polyether polyamide resin composition is excellent in terms of flexibility, crystallinity, melt moldability, molding processability, and toughness and furthermore, exhibits high heat resistance and a high elastic modulus.

In the case of using a mixture of m-xylylenediamine and p-xylylenediamine as the xylylenediamine (a-1), a proportion of p-xylylenediamine is preferably 90% by mole or less, more preferably 80% by mole or less, still more preferably 70% by mole or less, and yet still more preferably 5 to 70% by mole relative to a total amount of m-xylylenediamine and p-xylylenediamine. So long as the proportion of p-xylylenediamine falls within the foregoing range, a melting point of the resulting polyamide resin (A) is not close to a decomposition temperature of the polyamide resin (A), and hence, such is preferred.

As described above, though the diamine constituent unit that constitutes the polyamide resin (A) includes the constituent unit derived from the xylylenediamine (a-1), it may also include a constituent unit derived from other diamine compound within the range where the effects of the present invention are not hindered.

As the diamine compound that may constitute a diamine constituent unit other than the xylylenediamine (a-1), there can be exemplified aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, 2,4,4-trimethylhexamethylenediamine, etc.; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4 - aminocyclohexyl)methane, 2,2-bis(4-aminocyclohexyl)propane, bis(aminomethyl)decalin, bis(aminomethyl)tricyclodecane, etc.; diamines having an aromatic ring, such as bis(4-aminophenyl) ether, p-phenylenediamine, bis(aminomethyl)naphthalene, etc.; and the like. However, it should not be construed that the diamine compound is limited thereto.

1-2. Dicarboxylic acid constituent unit

The dicarboxylic acid constituent unit that constitutes the polyamide resin (A) includes a constituent unit derived from an $\alpha,\omega$-linear aliphatic dicarboxylic acid (a-2) having from 4 to 20 carbon atoms. A content of the constituent unit derived from an $\alpha,\omega$-linear aliphatic dicarboxylic acid (a-2) having from 4 to 20 carbon atoms in the dicarboxylic acid

constituent unit of the polyamide resin (A) is preferably 70 to 100% by mole, more preferably 80 to 100% by mole, and still more preferably 90 to 100% by mole.

As the $\alpha,\omega$-linear aliphatic dicarboxylic acid (a-2) having from 4 to 20 carbon atoms, there can be exemplified succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like. Of these, from the viewpoints of crystallinity and high elasticity, at least one selected from the group consisting of adipic acid and sebacic acid is preferred, and adipic acid is more preferred. These dicarboxylic acids may be used solely or in combination of two or more kinds thereof.

As described above, though the dicarboxylic acid constituent unit that constitutes the polyamide resin (A) includes the constituent unit derived from the $\alpha,\omega$-linear aliphatic dicarboxylic acid (a-2) having from 4 to 20 carbon atoms, it may also include a constituent unit derived from other dicarboxylic acid within the range where the effects of the present invention are not hindered.

As the dicarboxylic acid that may constitute the dicarboxylic acid constituent unit other than the $\alpha,\omega$-linear aliphatic dicarboxylic acid (a-2) having from 4 to 20 carbon atoms, there can be exemplified aliphatic dicarboxylic acids, such as oxalic acid, malonic acid, etc.; aromatic dicarboxylic acids, such as terephthalic acid, isophthalic acid, 2,6-naphthalenedicarboxylic acid, etc.; and the like. However, it should not be construed that the dicarboxylic acid is limited thereto.

In the case of using a mixture of the $\alpha,\omega$-linear aliphatic dicarboxylic acid (a-2) having from 4 to 20 carbon atoms and isophthalic acid as the dicarboxylic acid component, the heat resistance and molding processability of the polyamide resin (A) can be enhanced. A molar ratio of the $\alpha,\omega$-linear aliphatic dicarboxylic acid (a-2) having from 4 to 20 carbon atoms and isophthalic acid (($\alpha,\omega$-linear aliphatic dicarboxylic acid (a-2) having from 4 to 20 carbon atoms)/(isophthalic acid)) is preferably from 50/50 to 99/1, and more preferably from 70/30 to 95/5.

1-3. Physical properties of polyamide resin (A)

A relative viscosity of the polyamide resin (A) is preferably in the range of 1.7 to 4.0, and more preferably in the range of 1.9 to 3.8 from the viewpoints of moldability and melt mixing properties with other resins. The relative viscosity is a ratio of a fall time (t) obtained by dissolving 0.2 g of a sample in 20 mL of 96% by mass sulfuric acid and measuring the solution at 25°C by a Cannon-Fenske viscometer to a fall time (to) of the 96% by mass sulfuric acid itself as similarly measured and is expressed according to the following equation.

$$\text{Relative viscosity} = t/t_0$$

A melting point of the polyamide resin (A) is preferably in the range of 170 to 270°C, more preferably in the range of 175 to 270°C, still more preferably in the range of 180 to 270°C, and yet still more preferably in the range of 180 to 260°C from the viewpoints of heat resistance and melt moldability. The melting point is measured by using a differential scanning calorimeter.

A number average molecular weight of the polyamide resin (A) is preferably in the range of 6,000 to 50,000, and more preferably in the range of 10,000 to 45,000 from the viewpoints of moldability and melt mixing properties with the polyether polyamide (B). Incidentally, the number average molecular weight is measured by a method described in the Examples.

1-4. Production of polyamide resin (A)

The production of the polyamide resin (A) is not particularly limited but can be carried out by an arbitrary method under an arbitrary polymerization condition. The polyamide resin (A) can be, for example, produced by a method in which a salt composed of the diamine component (the diamine including the xylylenediamine (a-1) and the like) and the dicarboxylic acid component (the dicarboxylic acid including the $\alpha,\omega$-linear aliphatic dicarboxylic acid (a-2) having from 4 to 20 carbon atoms and the like) is subjected to temperature rise in a pressurized state in the presence of water, and polymerization is carried out in a molten state while removing the added water and condensed water. In addition, the polyamide resin (A) can also be produced by a method in which the diamine component (the diamine including the xylylenediamine (a-1) and the like) is added directly to the dicarboxylic acid component (the dicarboxylic acid including the $\alpha,\omega$-linear aliphatic dicarboxylic acid (a-2) having from 4 to 20 carbon atoms and the like) being in a molten state, and polycondensation is carried out at atmospheric pressure. In this case, in order to keep the reaction system in a uniform liquid state, the diamine component is continuously added to the dicarboxylic acid component, and during that period, the polycondensation is advanced while subjecting the reaction system to temperature rise such that the reaction

temperature does not fall below the melting point of each of the formed oligoamide and polyamide.

2. Polyether polyamide (B)

As for the polyether polyamide (B) which is used in the present invention, a diamine constituent unit thereof includes constituent units derived from a polyether diamine compound (b-1) represented by the following general formula (1) and a xylylenediamine (b-2), and a dicarboxylic acid constituent unit thereof includes a constituent unit derived from an $\alpha,\omega$-linear aliphatic dicarboxylic acid (b-3) having from 4 to 20 carbon atoms. By using the polyether polyamide (B) in combination with the polyamide resin (A), it is possible to provide a polyamide resin composition having excellent impact resistance while keeping the high elastic modulus and high rigidity which the polyamide resin (A) has.

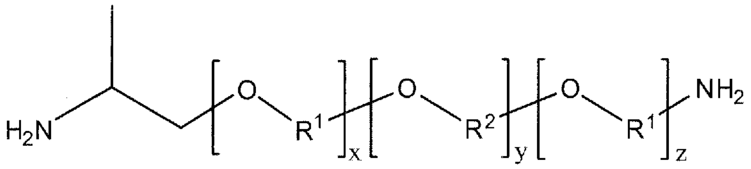 (1)

(In the formula, (x + z) represents 1 to 60; y represents 1 to 50; each $-OR^1-$independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.)

2-1. Diamine constituent unit

The diamine constituent unit that constitutes the polyether polyamide (B) includes constituent units derived from the polyether diamine compound (b-1) represented by the foregoing general formula (1) and the xylylenediamine (b-2). A total content of the constituent units derived from the polyether diamine compound (b-1) and the xylylenediamine (b-2) in the diamine constituent unit of the polyether polyamide (B) is preferably 70 to 100% by mole, more preferably 80 to 100% by mole, and still more preferably 90 to 100% by mole.

2-1-1. Polyether diamine compound (b-1)

The diamine constituent unit that constitutes the polyether polyamide (B) includes a constituent unit derived from the polyether diamine compound (b-1) represented by the foregoing general formula (1).

In the foregoing general formula (1), (x + z) is 1 to 60, preferably 2 to 40, more preferably 2 to 30, still more preferably 2 to 20, and yet still more preferably 2 to 15. In addition, y is 1 to 50, preferably 1 to 40, more preferably 1 to 30, and still more preferably 1 to 20. In the case where the values of x, y, and z are more than the above-described ranges, the compatibility with an oligomer or a polymer each composed of the xylylenediamine and the dicarboxylic acid as produced on the way of the reaction of melt polymerization is low, so that the polymerization reaction becomes hard to proceed.

In addition, in the foregoing general formula (1), each $-OR^1-$ independently represents $-OCH_2CH_2CH_2-$, $-OCH(CH_3)CH_2-$, or $-OCH_2CH(CH_3)-$.

A number average molecular weight of the polyether diamine compound (b-1) is preferably 176 to 7,000, more preferably 200 to 5,000, still more preferably 300 to 3,500, yet still more preferably 400 to 2,500, and even yet still more preferably 500 to 1,800. So long as the number average molecular weight of the polyether diamine compound falls within the foregoing range, a polymer that reveals functions as an elastomer, such as flexibility, rubber elasticity, etc., can be obtained.

The polyether diamine compound (b-1) represented by the foregoing general formula (1) is specifically a polyether diamine compound represented by the following general formula (1-1) or (1-2).

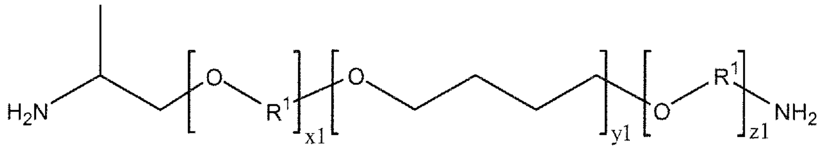 (1-1)

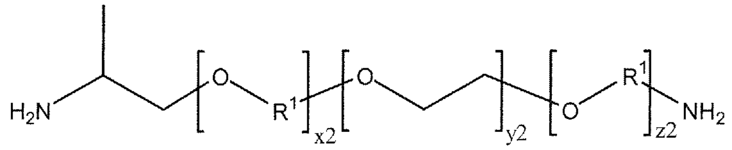

(1-2)

(In the general formula (1-1), (x1 + z1) represents 1 to 60; y1 represents 1 to 50; and $-OR^1-$ represents $-OCH_2CH_2CH_2-$, $-OCH(CH_3)CH_2-$, or $-OCH_2CH(CH_3)-$.

In the general formula (1-2), (x2 + z2) represents 1 to 60; y2 represents 1 to 50: and $-OR^1-$ represents $-OCH_2CH_2CH_2-$, $-OCH(CH_3)CH_2-$, or $-OCH_2CH(CH_3)-$).

In the foregoing general formula (1-1), the numerical value of (x1 + z1) is 1 to 60, preferably 2 to 40, more preferably 2 to 30, still more preferably 2 to 20, and yet still more preferably 2 to 15. In addition, the numerical value of y1 is 1 to 50, preferably 1 to 40, more preferably 1 to 30, and still more preferably 1 to 20.

In the foregoing general formula (1-2), the numerical value of (x2 + z2) is 1 to 60, preferably 2 to 40, more preferably 2 to 30, still more preferably 2 to 20, and yet still more preferably 2 to 15. In addition, the numerical value of y2 is 1 to 50, preferably 1 to 40, more preferably 1 to 30, and still more preferably 1 to 20.

A number average molecular weight of the polyether diamine compound represented by the foregoing general formula (1-1) is preferably 204 to 7,000, more preferably 250 to 5,000, still more preferably 300 to 3,500, yet still more preferably 400 to 2,500, and even yet still more preferably 500 to 1,800.

A number average molecular weight of the polyether diamine compound represented by the foregoing general formula (1-2) is preferably 176 to 5,700, more preferably 200 to 4,000, still more preferably 300 to 3,000, yet still more preferably 400 to 2,000, and even yet still more preferably 500 to 1,800.

Incidentally, these polyether diamine compounds (b-1) may be used solely or in combination of two or more kinds thereof.

A proportion of the constituent unit derived from the polyether diamine compound (b-1) in the diamine constituent unit of the polyether polyamide (B) is preferably 1 to 50% by mole, more preferably 3 to 30% by mole, still more preferably 5 to 25% by mole, and yet still more preferably 5 to 20% by mole. So long as the proportion of the constituent unit derived from the polyether diamine (b-1) in the diamine constituent unit of the polyether polyamide (B) falls within the foregoing range, the resulting polyamide resin composition has a high elastic modulus and also has excellent impact resistance.

2-1-2. Xylylenediamine (b-2)

The diamine constituent unit that constitutes the polyether polyamide (B) includes a constituent unit derived from the xylylenediamine (b-2). The xylylenediamine (b-2) is preferably m-xylylenediamine, p-xylylenediamine, or a mixture thereof, more preferably m-xylylenediamine or a mixture of m-xylylenediamine and p-xylylenediamine, and still more preferably a mixture of m-xylylenediamine and p-xylylenediamine.

In the case where the xylylenediamine (b-2) is derived from m-xylylenediamine, the resulting polyether polyamide is excellent in terms of flexibility, crystallinity, melt moldability, molding processability, and toughness.

In the case where the xylylenediamine (b-2) is derived from a mixture of m-xylylenediamine and p-xylylenediamine, the resulting polyether polyamide is excellent in terms of flexibility, crystallinity, melt moldability, molding processability, and toughness and furthermore, exhibits high heat resistance and a high elastic modulus.

In the case of using a mixture of m-xylylenediamine and p-xylylenediamine as the xylylenediamine (b-2), a proportion of p-xylylenediamine is preferably 90% by mole or less, more preferably 80% by mole or less, still more preferably 70% by mole or less, and yet still more preferably 5 to 70% by mole relative to a total amount of m-xylylenediamine and p-xylylenediamine. So long as the proportion of p-xylylenediamine falls within the foregoing range, a melting point of the resulting polyether polyamide is not close to a decomposition temperature of the polyether polyamide, and hence, such is preferred.

A proportion of the constituent unit derived from the xylylenediamine (b-2) in the diamine constituent unit of the polyether polyamide (B) is preferably 99 to 50% by mole, more preferably 97 to 70% by mole, still more preferably 95 to 75% by mole, and yet still more preferably 95 to 80% by mole. So long as the proportion of the constituent unit derived from the xylylenediamine (b-2) in the diamine constituent unit of the polyether polyamide (B) falls within the foregoing range, the resulting polyamide resin composition is excellent in terms of flexibility, crystallinity, melt moldability, molding processability, and toughness.

As described above, though the diamine constituent unit that constitutes the polyether polyamide (B) includes the constituent units derived from the polyether diamine compound (b-1) represented by the foregoing general formula (1) and the xylylenediamine (b-2), it may also include a constituent unit derived from other diamine compound within the range where the effects of the present invention are not hindered.

As the diamine compound that may constitute a diamine constituent unit other than the polyether diamine

compound (b-1) and the xylylenediamine (b-2), there can be exemplified aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, 2,4,4-trimethylhexamethylenediamine, etc.; alicyclic diamines, such as 1,3-bis(aminomethyl)cyclohexane, 1,4-bis (aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, etc.; diamines having an aromatic ring, such as bis(4-aminophenyl) ether, p-phenylenediamine, bis(aminomethyl)naphthalene, etc.; and the like. However, it should not be construed that the diamine compound is limited thereto.

2-2. Dicarboxylic acid constituent unit

The dicarboxylic acid constituent unit that constitutes the polyether polyamide (B) includes a constituent unit derived from an $\alpha,\omega$-linear aliphatic dicarboxylic acid (b-3) having from 4 to 20 carbon atoms. A content of the constituent unit derived from an ($\alpha,\omega$)-linear aliphatic dicarboxylic acid (b-3) having from 4 to 20 carbon atoms in the dicarboxylic acid constituent unit of the polyether polyamide (B) is preferably 70 to 100% by mole, more preferably 80 to 100% by mole, and still more preferably 90 to 100% by mole.

As the $\alpha,\omega$-linear aliphatic dicarboxylic acid (b-3) having from 4 to 20 carbon atoms, there can be exemplified succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like. Of these, from the viewpoints of crystallinity and high elasticity, at least one selected from the group consisting of adipic acid and sebacic acid is preferred, and sebacic acid is more preferred. These dicarboxylic acids may be used solely or in combination of two or more kinds thereof.

As described above, though the dicarboxylic acid constituent unit that constitutes the polyethylene polyamide (B) includes the constituent unit derived from the $\alpha,\omega$-linear aliphatic dicarboxylic acid (b-3) having from 4 to 20 carbon atoms, it may also include a constituent unit derived from other dicarboxylic acid within the range where the effects of the present invention are not hindered.

As the dicarboxylic acid that may constitute the dicarboxylic acid constituent unit other than the $\alpha,\omega$-linear aliphatic dicarboxylic acid (b-3) having from 4 to 20 carbon atoms, there can be exemplified aliphatic dicarboxylic acids, such as oxalic acid, malonic acid, etc.; aromatic dicarboxylic acids, such as terephthalic acid, isophthalic acid, 2,6-naphthalenedicarboxylic acid, etc.; and the like. However, it should not be construed that the dicarboxylic acid is limited thereto.

In the case of using a mixture of the $\alpha,\omega$-linear aliphatic dicarboxylic acid (b-3) having from 4 to 20 carbon atoms and isophthalic acid as the dicarboxylic acid component, the heat resistance and molding processability of the polyether polyamide (B) can be enhanced. A molar ratio of the $\alpha,\omega$-linear aliphatic dicarboxylic acid (b-3) having from 4 to 20 carbon atoms and isophthalic acid (($\alpha.\omega$-linear aliphatic dicarboxylic acid (b-3) having from 4 to 20 carbon atoms)/(isophthalic acid)) is preferably from 50/50 to 99/1, and more preferably from 70/30 to 95/5.

2-3. Physical properties of polyether polyamide (B)

When the polyether polyamide (B) contains, as a hard segment, a highly crystalline polyamide block formed of the xylylenediamine (b-2) and the $\alpha,\omega$-linear aliphatic dicarboxylic acid (b-3) having from 4 to 20 carbon atoms and, as a soft segment, a polyether block derived from the polyether diamine compound (b-1), excellent melt moldability and molding processability are revealed. Furthermore, the resulting polyether polyamide is excellent in terms of toughness, flexibility, crystallinity, heat resistance, and the like.

A relative viscosity of the polyether polyamide (B) is preferably in the range of 1.1 to 3.0, more preferably in the range of 1.1 to 2.9, and still more preferably in the range of 1.1 to 2.8 from the viewpoints of moldability and melt mixing properties with other resins. The relative viscosity is a ratio of a fall time (t) obtained by dissolving 0.2 g of a sample in 20 mL of 96% by mass sulfuric acid and measuring the resulting solution at 25°C by a Cannon-Fenske viscometer to a fall time (to) of the 96% by mass sulfuric acid itself as similarly measured and is expressed according to the following equation.

$$\text{Relative viscosity} = t/t_0$$

A melting point of the polyether polyamide (B) is preferably in the range of 170 to 270°C, more preferably in the range of 175 to 270°C, still more preferably in the range of 180 to 270°C, and yet still more preferably in the range of 180 to 260°C from the viewpoints of heat resistance and melt moldability. The melting point is measured by using a

differential scanning calorimeter.

A rate of tensile elongation at break of the polyether polyamide (B) (measurement temperature: 23°C, humidity: 50% RH (relative humidity)) is preferably 100% or more, more preferably 200% or more, still more preferably 250% or more, and yet still more preferably 300% or more from the viewpoint of flexibility.

A tensile elastic modulus of the polyether polyamide (B) (measurement temperature: 23°C, humidity: 50% RH (relative humidity)) is preferably 100 MPa or more, more preferably 200 MPa or more, still more preferably 300 MPa or more, yet still more preferably 400 MPa or more, and even yet still more preferably 500 MPa or more from the viewpoints of flexibility and mechanical strength.

The tensile elastic modulus and the rate of tensile elongation at break are measured in conformity with JIS K7161.

A number average molecular weight of the polyether polyamide (B) is preferably in the range of 1,000 to 50,000, more preferably in the range of 3,000 to 30,000, still more preferably in the range of 5,000 to 25,000, and yet still more preferably in the range of 7,000 to 22,000 from the viewpoints of moldability and melt mixing properties with the polyamide resin (A). Incidentally, the number average molecular weight is measured by a method described in the Examples.

2-4. Production of polyether polyamide (B)

The production of the polyether polyamide (B) is not particularly limited but can be carried out by an arbitrary method under an arbitrary polymerization condition. The polyether polyamide (B) can be, for example, produced by a method in which a salt composed of the diamine component (the diamine including the polyether diamine compound (b-1) and the xylylenediamine (b-2), and the like) and the dicarboxylic acid component (the dicarboxylic acid including the $\alpha,\omega$-linear aliphatic dicarboxylic acid (b-3) having from 4 to 20 carbon atoms and the like) is subjected to temperature rise in a pressurized state in the presence of water, and polymerization is carried out in a molten state while removing the added water and condensed water. In addition, the polyether polyamide (B) can also be produced by a method in which the diamine component (the diamine including the polyether diamine compound (b-1) and the xylylenediamine (b-2), and the like) is added directly to the dicarboxylic acid component (the dicarboxylic acid including the $\alpha,\omega$-linear aliphatic dicarboxylic acid (b-3) having from 4 to 20 carbon atoms and the like) being in a molten state, and polycondensation is carried out at atmospheric pressure. In this case, in order to keep the reaction system in a uniform liquid state, the diamine component is continuously added to the dicarboxylic acid component, and during that period, the polycondensation is advanced while subjecting the reaction system to temperature rise such that the reaction temperature does not fall below the melting point of each of the formed oligoamide and polyamide.

On that occasion, among the diamine components, the polyether diamine compound (b-1) may be previously charged together with the dicarboxylic acid component in a reaction tank. By previously charging the polyether diamine compound (b-1) in a reaction tank, thermal deterioration of the polyether diamine compound (b-1) can be suppressed. In that case, in order to keep the reaction system in a uniform liquid state, the diamine component other than the polyether diamine compound (b-1) is continuously added to the dicarboxylic acid component, too, and during that period, the polycondensation is advanced while subjecting the reaction system to temperature rise such that the reaction temperature does not fall below the melting point of each of the formed oligoamide and polyamide.

A molar ratio of the diamine component (the diamine including the polyether diamine compound (b-1) and the xylylenediamine (b-2), and the like) and the dicarboxylic acid component (the dicarboxylic acid including the $\alpha,\omega$-linear aliphatic dicarboxylic acid (b-3) having from 4 to 20 carbon atoms and the like) ((diamine component)/(dicarboxylic acid component)) is preferably in the range of 0.9 to 1.1, more preferably in the range of 0.93 to 1.07, still more preferably in the range of 0.95 to 1.05, and yet still more preferably in the range of 0.97 to 1.02. So long as the molar ratio falls within the foregoing range, an increase of the molecular weight is easily advanced.

A polymerization temperature is preferably from 150 to 300°C, more preferably from 160 to 280°C, and still more preferably from 170 to 270°C. So long as the polymerization temperature falls within the foregoing temperature range, the polymerization reaction is rapidly advanced. In addition, since thermal decomposition of the monomers and the oligomer or polymer, etc., which is formed on the way of the polymerization, is hardly caused, properties of the resulting polyether polyamide become favorable.

A polymerization time is generally from 1 to 5 hours after starting to add dropwise the diamine component. By allowing the polymerization time to fall within the foregoing range, the molecular weight of the polyether polyamide (B) can be sufficiently increased, and furthermore, coloration of the resulting polyether polyamide can be suppressed.

It is preferred that the polyether polyamide (B) is produced by a melt polycondensation (melt polymerization) method by the addition of a phosphorus atom-containing compound. As the melt polycondensation method, a method in which the diamine component is added dropwise to the molten dicarboxylic acid component at atmospheric pressure, and polymerization is carried out in a molten state while removing the condensed water. Furthermore, with respect to the diamine components, a method of previously charging the polyether diamine compound (b-1) together with the dicarboxylic acid component in a reaction tank and melting, adding dropwise the xylylenediamine component in the reaction tank, and then carrying out polymerization in a molten state while removing the condensed water is more

preferred.

A phosphorus atom-containing compound can be added in the polycondensation system of the polyether polyamide (B) within the range where its properties are not hindered. Examples of the phosphorus atom-containing compound which can be added include dimethylphosphinic acid, phenylmethylphosphinic acid, hypophosphorous acid, sodium hypophosphite, potassium hypophosphite, lithium hypophosphite, calcium hypophosphite, ethyl hypophosphite, phenylphosphonous acid, sodium phenylphosphonoate, potassium phenylphosphonoate, lithium phenylphosphonoate, ethyl phenylphosphonoate, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, pyrrophosphorous acid, and the like. Of these, in particular, hypophosphorous acid metal salts, such as sodium hypophosphite, potassium hypophosphite, lithium hypophosphite, etc., are preferred, with sodium hypophosphite being especially preferred, from the viewpoint that they are high in terms of an effect for promoting the amidation reaction and also excellent in terms of a coloration preventing effect. It should not be construed that the phosphorus atom-containing compound which can be used in the present invention is limited thereto. An addition amount of the phosphorus atom-containing compound which is added in the polycondensation system is preferably from 1 to 1,000 ppm, more preferably from 5 to 1,000 ppm, and still more preferably from 10 to 1,000 ppm as converted into a phosphorus atom concentration in the polyether polyamide (B) from the viewpoints of favorable appearance and molding processability.

In addition, it is preferred to add an alkali metal compound in combination with the phosphorus atom-containing compound in the polycondensation system of the polyether polyamide (B). In order to prevent the coloration of the polymer during the polycondensation, it is necessary to allow a sufficient amount of the phosphorus atom-containing compound to exist; however, under certain circumstances, there is a concern that gelation of the polymer is caused. For that reason, in order to also adjust an amidation reaction rate, it is preferred to allow an alkali metal compound to coexist. The alkali metal compound is preferably an alkali metal hydroxide or an alkali metal acetate. Examples of the alkali metal compound which can be used in the present invention include lithium hydroxide, sodium hydroxide, potassium hydroxide, rubidium hydroxide, cesium hydroxide, lithium acetate, sodium acetate, potassium acetate, rubidium acetate, cesium acetate, and the like. However, the alkali metal compound can be used without being limited to these compounds.

In the case of adding the alkali metal compound in the polycondensation system, a value obtained by dividing the molar number of the compound by the molar number of the phosphorus atom-containing compound is preferably 0.50 to 1.00, more preferably 0.55 to 0.95, and still more preferably 0.60 to 0.90. So long as the subject value falls within the foregoing range, an effect for appropriately suppressing the promotion of the amidation reaction attributable to the phosphorus atom-containing compound is brought, and the occurrence of the matter that the polycondensation reaction rate is lowered due to excessive suppression of the reaction, so that thermal history of the polymer increases, thereby causing an increase of gelation of the polymer can be avoided.

A sulfur atom concentration of the polyether polyamide (B) is preferably 1 to 200 ppm, more preferably 10 to 150 ppm, and still more preferably 20 to 100 ppm. So long as the sulfur atom concentration falls within the foregoing range, not only an increase of a yellowness index (YI value) of the polyether polyamide at the time of production can be suppressed, but also an increase of the YI value on the occasion of melt molding the polyether polyamide can be suppressed, and the YI value of the resulting polyamide resin composition can be made low.

The polyether polyamide (B) obtained by melt polycondensation is once taken out from the polymerization system, pelletized, and then dried for use. In addition, for the purpose of further increasing the degree of polymerization of the polyether polyamide (B), solid phase polymerization of the polyether polyamide (B) may also be carried out. As a heating apparatus which is used for drying and solid phase polymerization, a continuous heat drying apparatus, a rotary drum-type heating apparatus called a tumble dryer, a conical dryer, a rotary dryer, or the like, or a or a cone-type heating apparatus equipped with a rotary blade in the inside thereof, called a Nauta mixer can be suitably used. However, a known method and a known apparatus can be used without being limited thereto.

3. Polyamide resin composition

The polyamide resin composition of the present invention contains the polyamide resin (A) and the polyether polyamide (B) as described above.

A content of the polyether polyamide (B) in the polyamide resin composition of the present invention is preferably 5 to 50% by mass, more preferably 5 to 40% by mass, and still more preferably 7 to 35% by mass. So long as the content of the polyether polyamide (B) in the polyamide resin composition of the present invention falls within the foregoing range, the polyamide resin composition has a high elastic modulus and also has excellent impact resistance.

A content of the polyamide resin (A) in the polyamide resin composition of the present invention is preferably 95 to 50% by mass, more preferably 95 to 60% by mass, and still more preferably 93 to 65% by mass.

The polyamide resin composition of the present invention may also include an additive within the range where the effects of the present invention are not hindered. Examples of the additive include a filler, a stabilizer, a colorant, an

ultraviolet absorber, a photostabilizer, an antioxidant, an antistatic agent, a flame retarder, a crystallization accelerator, a fibrous reinforcing material, a plasticizer, a lubricant, a heat-resistant agent, a matting agent, a nucleating agent, a coloring preventing agent, a gelation preventing agent, and the like. However, it should not be construed that the additive is limited thereto.

In addition, the polyamide resin composition of the present invention may further include a thermoplastic resin, such as polyester resins, polyolefin resins, acrylic resins, etc., within the range where the effects of the present invention are not hindered. In addition, the polyamide resin composition of the present invention may also include a polyamide resin other than the polyamide resin (A) in the present invention.

Examples of the polyester resin include a polyethylene terephthalate resin, a polyethylene terephthalate-isophthalate copolymer resin, a polyethylene-1,4-cyclohexane dimethylene-terephthalate copolymer resin, a polyethylene-2,6-naphthalene dicarboxylate resin, a polyethylene-2,6-naphthalene dicarboxylate-terephthalate copolymer resin, a polyethylene-terephthalate-4,4'-biphenyl dicarboxylate copolymer resin, a poly-1,3-propylene-terephthalate resin, a polybutylene terephthalate resin, a polybutylene-2,6-naphthalene dicarboxylate resin, and the like. Preferred examples of the polyester resin include a polyethylene terephthalate resin, a polyethylene terephthalate-isophthalate copolymer resin, a polybutylene terephthalate resin, and a polyethylene-2,6-naphthalene dicarboxylate resin.

Examples of the polyolefin resin include polyethylenes, such as low density polyethylene (LDPE), linear low density polyethylene (LLDPE), very low density polyethylene (VLDPE), medium density polyethylene (MDPE), high density polyethylene (HDPE), etc.; polypropylenes, such as a propylene homopolymer, a random or block copolymer of propylene and ethylene or an $\alpha$-olefin, etc.; mixtures of two or more kinds thereof, and the like. A majority of the polyethylenes is a copolymer of ethylene and an $\alpha$-olefin. In addition, the polyolefin resin includes a modified polyolefin resin modified with a small amount of a carboxyl group-containing monomer, such as acrylic acid, maleic acid, methacrylic acid, maleic anhydride, fumaric acid, itaconic acid, etc. The modification is in general carried out by means of copolymerization or graft modification.

Examples of the acrylic resin include a homopolymer of a (meth)acrylic acid ester, a copolymer of two or more different kinds of (meth)acrylic acid ester monomers, and a copolymer of a (meth)acrylic acid ester and other monomer. Specifically, examples thereof include (meth)acrylic resins composed of a homo- or copolymer including a (meth)acrylic acid ester, such as polymethyl (meth)acrylate, polyethyl (meth)acrylate, polypropyl (meth)acrylate, polybutyl (meth)acrylate, a methyl (meth)acrylate-butyl (meth)acrylate copolymer, an ethyl (meth)acrylate-butyl (meth)acrylate copolymer, an ethylene-methyl (meth)acrylate copolymer, a styrene-methyl (meth)acrylate copolymer, etc.

Examples of the polyamide resin other than the polyamide resin (A) include polycaproamide (nylon 6), polyundecanamide (nylon 11), polydodecanamide (nylon 12), polytetramethylene adipamide (nylon 46), polyhexamethylene adipamide (nylon 66), polyhexamethylene azelamide (nylon 69), polyhexamethylene sebacamide (nylon 610), polyundecamethylene adipamide (nylon 116), polyhexamethylene dodecamide (nylon 612), polyhexamethylene terephthalamide (nylon 6T (T represents a terephthalic acid component unit; hereinafter the same)), polyhexamethylene isophthalamide (nylon 61 (I represents an isophthalic acid component unit; hereinafter the same)), polyhexamethylene terephthalisophthalamide (nylon 6TI), polyheptamethylene terephthalamide (nylon 9T), a polyamide resin obtained by polycondensation of 1,3- or 1,4-bis(aminomethyl)cyclohexane and adipic acid (nylon 1,3-/1,4-BAC6 (BAC represents a bis(aminomethyl)cyclohexane component unit), and copolymerized amides thereof, and the like.

4. Physical properties of polyamide resin composition

It is preferred that the polyamide resin composition of the present invention has a flexural modulus of 3,300 MPa or more and a Charpy impact strength of 75 kJ/$m^2$ or more. So long as not only the flexural modulus falls within the foregoing range, but also the Charpy impact strength falls within the foregoing range, the resulting polyamide resin composition has a high elastic modulus and high rigidity and also has excellent impact resistance.

The flexural modulus of the polyamide resin composition of the present invention is preferably 3,300 MPa or more, more preferably 3,400 MPa or more, and still more preferably 3,500 MPa or more. So long as the flexural modulus of the polyamide resin composition of the present invention falls within the foregoing range, a high elastic modulus and excellent rigidity are revealed. The flexural modulus is measured in conformity with JIS K7171.

The Charpy impact strength of the polyamide resin composition of the present invention is preferably 75 kJ/$m^2$ or more, more preferably 90 kJ/$m^2$ or more, and still more preferably 100 kJ/$m^2$ or more. So long as the Charpy impact strength of the polyamide resin composition of the present invention falls within the foregoing range, excellent impact resistance is revealed. The Charpy impact strength is measured in conformity with ISO179-1.

5. Production of polyamide resin composition

The polyamide resin composition of the present invention can be obtained by melt kneading the polyamide resin (A) and the polyether polyamide (B) as described above.

Examples of a method of melt kneading the polyamide resin composition of the present invention include a method of achieving melt kneading using a variety of usually used extruders, such as a single-screw or twin-screw extruder, etc., and the like. Of these, a method of using a two-screw extruder is preferred from the standpoints of productivity, versatility, and the like. On that occasion, it is preferred to set up a melt kneading temperature in the range of the melting point of each of the polyamide resin (A) and the polyether polyamide (B) or higher and a temperature that is higher by at most 60°C than either the melting point of the polyamide resin (A) or the melting point of the polyether polyamide (B), whichever is higher; and it is more preferred to set up the melt kneading temperature in the range of a temperature that is higher by 10°C than the melting point of each of the polyamide resin (A) and the polyether polyamide (B) or higher and a temperature that is higher by at most 40°C than either the melting point of the polyamide resin (A) or the melting point of the polyether polyamide (B), whichever is higher. By setting up the melt kneading temperature at the melting point of each of the polyamide resin (A) and the polyether polyamide (B) or higher, solidification of each of the polyamide resin (A) and the polyether polyamide (B) can be suppressed; whereas by setting up the melt kneading temperature at a temperature that is higher by at most 60°C than either the melting point of the polyamide resin (A) or the melting point of the polyether polyamide (B), whichever is higher, thermal deterioration of each of the polyamide resin (A) and the polyether polyamide (B) can be suppressed.

It is preferred to regulate a residence time at melt kneading in the range of 1 to 10 minutes, and it is more preferred to regulate the residence time in the range of 2 to 7 minutes. By regulating the residence time to 1 minute or more, dispersion of the polyamide resin (A) and the polyether polyamide (B) is sufficient, whereas by regulating the residence time to 10 minutes or less, thermal deterioration of each of the polyamide resin (A) and the polyether polyamide (B) can be suppressed.

It is preferred that the screw of the twin-screw extruder has at least one of a reverse helix screw element portion and a kneading disc portion in at least one place, and the melting kneading is carried out while retaining a part of the polyamide resin composition in the portion.

The melt kneaded polyamide resin composition may be subjected to extrusion molding as it is, thereby forming a molded article, such as a film, etc., or may be once pelletized and then again subjected to extrusion molding, injection molding, or the like, thereby forming a variety of molded articles.

In addition, in the case of adding an additive to the polyamide resin composition of the present invention, on the occasion of melt kneading the polyamide (A) and the polyether polyamide (B), the additive may be kneaded at the same time.

B. Molded article

The molded article of the present invention can be obtained by molding the polyamide resin composition of the present invention into a variety of forms by an arbitrary molding method.

As the molding method, there can be exemplified molding methods, for example, injection molding, blow molding, extrusion molding, compression molding, vacuum molding, press molding, direct blow molding, rotational molding, sandwich molding, two-color molding, etc.

The molded article using the polyamide resin composition of the present invention has a high elastic modulus and also has excellent impact resistance, and is especially suitable for injection molded articles. Among injection molded articles, the molded article using the polyamide resin composition of the present invention is suitable for automobile components, electrical components, electronic components, and the like.

[Examples]

The present invention is hereunder described in more detail by reference to the Examples, but it should not be construed that the present invention is limited thereto. Incidentally, in the present Examples, various measurements were carried out by the following methods.

(1) Relative viscosity ($\eta r$)

0.2 g of a sample was accurately weighed, and the sample was added to 20 mL of 96% by mass sulfuric acid and completely dissolved therein at 20 to 30°C with stirring, thereby preparing a solution. Thereafter, 5 mL of the solution was rapidly taken into a Cannon-Fenske viscometer, allowed to stand in a thermostat at 25°C for 10 minutes, and then measured for a fall time (t). In addition, a fall time (to) of the 96% by mass sulfuric acid itself was similarly measured. A relative viscosity was calculated from t and to according to the following equation.

$$\text{Relative viscosity} = t/t_0$$

(2) Number average molecular weight (Mn)

First of all, a sample was dissolved in a mixed solvent of phenol and ethanol (phenol/ethanol = 4/1 (volume ratio)) and a benzyl alcohol solvent, respectively, and a terminal carboxyl group concentration and a terminal amino group concentration were determined by means of neutralization titration with hydrochloric acid and a sodium hydroxide aqueous solution, respectively. A number average molecular weight was determined from quantitative values of the terminal amino group concentration and the terminal carboxyl group concentration according to the following equation.

$$\text{Number average molecular weight} = 2 \times 1{,}000{,}000/([NH_2] + [COOH])$$

$[NH_2]$: Terminal amino group concentration (μeq/g)
[COOH]: Terminal carboxyl group concentration (μeq/g)

(3) Differential scanning calorimetry (glass transition temperature, crystallization temperature, and melting point)

The measurement of a differential scanning calorie was carried out in conformity with JIS K7121 and K7122. By using a differential scanning calorimeter (a trade name: "DSC-60", manufactured by Shimadzu Corporation), each sample was charged in a DSC measurement pan and subjected to a pre-treatment of raising the temperature to 300°C in a nitrogen atmosphere at a temperature rise rate of 10°C/min and rapid cooling, followed by performing the measurement. As for the measurement condition, the temperature was raised at a rate of 10°C/min, and after keeping at 300°C for 5 minutes, the temperature was dropped to 100°C at a rate of -5°C/min, thereby determining a glass transition temperature Tg, a crystallization temperature Tch, and a melting point Tm.

(4) Flexural modulus (unit: MPa)

Each of polyamide resin compositions obtained in Examples 1 to 4 and Comparative Example 2 and a polyamide resin obtained in Comparative Example 1 was dried in vacuo at 150°C for 5 hours and then applied in an injection molding machine (a trade name: "SE130DU'', manufactured by Sumitomo Heavy Industries, Ltd.) while setting up a cylinder temperature at a temperature that is higher by 30°C than a melting point of the polyamide resin (A), thereby fabricating a test piece (ISO test piece, thickness: 4 mm).
The resulting test piece was subjected to a heat treatment (crystallization treatment) under a condition at 150°C for 1 hour and determined for a flexural modulus (MPa) in conformity with JIS K7171. Incidentally, the flexural modulus was measured by using a tensile tester (a trade name: "STROGRAPH", manufactured by Toyo Seiki Seisaku-Sho, Ltd.) as a device at a measurement temperature at 23°C and a measurement humidity of 50% RH (relative humidity).
The measurement results were evaluated according to the following criteria.

A: The flexural modulus is 3,500 MPa or more.
B: The flexural modulus is 3,300 MPa or more and less than 3,500 MPa.
C: The flexural modulus is less than 3,300 MPa.

(5) Chary impact strength (unit: $kJ/m^2$)

Each of polyamide resin compositions obtained in Examples 1 to 4 and Comparative Example 2 and a polyamide resin obtained in Comparative Example 1 was used and applied in an injection molding machine (a trade name: "SE130DU", manufactured by Sumitomo Heavy Industries, Ltd.) under a condition at a cylinder temperature of 280°C and a die temperature of 15°C, thereby fabricating an ISO test piece. The resulting test piece was subjected to a heat treatment (crystallization treatment) under a condition at 150°C for 1 hour and evaluated in conformity with IS0179-1.
The measurement results were evaluated according to the following criteria.

A: The Charpy impact strength is 90 $kJ/m^2$ or more.
B: The Charpy impact strength is 75 $kJ/m^2$ or more and less than 90 $kJ/m^2$.
C: The Charpy impact strength is less than 75 $kJ/m^2$.

Production Example 1

(Production of polyamide A-1)

In a reaction vessel having a capacity of about 3 L and equipped with a stirrer, a nitrogen gas inlet, and a condensed water discharge port, 730.8 g of adipic acid, 0.6322 g of sodium hypophosphite monohydrate, and 0.4404 g of sodium acetate were charged, and after thoroughly purging the inside of the vessel with nitrogen, the added components were melted at 170°C while feeding a nitrogen gas at a rate of 20 mL/min into the vessel. A mixed liquid of 476.70 g of m-xylylenediamine (MXDA) (manufactured by Mitsubishi Gas Chemical Company, Inc.) and 204.30 g of p-xylylenediamine (PXDA) (manufactured by Mitsubishi Gas Chemical Company, Inc.) (molar ratio: (MXDA/PXDA = 70/30)) was added into the vessel while gradually raising the temperature of the inside of the vessel to 275°C, and the mixture was polymerized for about 2 hours, thereby obtaining a polyamide resin A-1. ηr = 2.07, [COOH] = 55.70 μeq/g, $[NH_2]$ = 64.58 μeq/g, Mn = 16,623, Tg = 89.0°C, Tch = 135.0°C, Tm = 257.0°C.

Production Example 2

(Production of polyether polyamide B-1)

In a reaction vessel having a capacity of about 3 L and equipped with a stirrer, a nitrogen gas inlet, and a condensed water discharge port, 687.65 g of sebacic acid, 0.6612 g of sodium hypophosphite monohydrate, and 0.4605 g of sodium acetate were charged, and after thoroughly purging the inside of the vessel with nitrogen, the added components were melted at 170°C while feeding a nitrogen gas at a rate of 20 mL/min into the vessel. A mixed liquid of 291.74 g of m-xylylenediamine (MXDA) (manufactured by Mitsubishi Gas Chemical Company, Inc.) and 125.03 g of p-xylylenediamine (PXDA) (manufactured by Mitsubishi Gas Chemical Company, Inc.) (molar ratio: (MXDA/PXDA = 70/30)) and 306.00 g of a polyether diamine (a trade name: "JEFFAMINE" (registered trademark) ED-900, manufactured by Huntsman Corporation, USA; according to the catalog of Huntsman Corporation, USA, in the foregoing general formula (1-2). $-OR^1-$ is $-OCH(CH_3)CH_2-$ or $-OCH_2CH(CH_3)-$, an approximate figure of (x2 + z2) is 6.0, an approximate figure of y2 is 12.5, and an approximate average molecular weight is 900) was added into the vessel while gradually raising the temperature of the inside of the vessel to 260°C, and the mixture was polymerized for about 2 hours, thereby obtaining a polyether polyamide B-1. ηr = 1.36, [COOH] = 66.35 μeq/g, $[NH_2]$ = 74.13 μeq/g, Mn = 14,237, Tg = 16.9°C, Tch = 52.9°C, Tm = 201.9°C.

Production Example 3

(Production of polyether polyamide B-2)

In a reaction vessel having a capacity of about 3 L and equipped with a stirrer, a nitrogen gas inlet, and a condensed water discharge port, 667.43 g of sebacic acid, 0.6587 g of sodium hypophosphite monohydrate, and 0.4588 g of sodium acetate were charged, and after thoroughly purging the inside of the vessel with nitrogen, the added components were melted at 170°C while feeding a nitrogen gas at a rate of 20 mL/min into the vessel. A mixed liquid of 283.16 g of m-xylylenediamine (MXDA) (manufactured by Mitsubishi Gas Chemical Company, Inc.) and 121.35 g of p-xylylenediamine (PXDA) (manufactured by Mitsubishi Gas Chemical Company, Inc.) (molar ratio: (MXDA/PXDA = 70/30)) and 330.00 g of a polyether diamine (a trade name: JEFFAMINE (registered trademark) XTJ-542, manufactured by Huntsman Corporation, USA; according to the catalog of Huntsman Corporation, USA, in the foregoing general formula (1-1), $-OR^1-$ is $-OCH(CH_3)CH_2-$ or $-OCH_2CH(CH_3)-$, an approximate figure of (x1 + z1) is 6.0, an approximate figure of y1 is 9.0, and an approximate average molecular weight is 1,000) was added into the vessel while gradually raising the temperature of the inside of the vessel to 260°C, and the mixture was polymerized for about 2 hours, thereby obtaining a polyether polyamide B-2. ηr = 1.31, [COOH] = 81.62 μeq/g, $[NH_2]$ = 68.95 μeq/g, Mn = 13,283, Tg = 12.9°C, Tch = 69.5°C, Tm = 204.5°C.

Production Example 4

(Production of polyether polyamide B-3)

In a reaction vessel having a capacity of about 3 L and equipped with a stirrer, a nitrogen gas inlet, and a condensed water discharge port, 546.08 g of sebacic acid, 0.6586 g of sodium hypophosphite monohydrate, and 0.4588 g of sodium acetate were charged, and after thoroughly purging the inside of the vessel with nitrogen, the added components were melted at 170°C while feeding a nitrogen gas at a rate of 20 mL/min into the vessel. A mixed liquid of

205.93 g of m-xylylenediamine (MXDA) (manufactured by Mitsubishi Gas Chemical Company, Inc.) and 88.26 g of p-xylylenediamine (PXDA) (manufactured by Mitsubishi Gas Chemical Company, Inc.) (molar ratio: (MXDA/PXDA = 70/30)) and 540.00 g of a polyether diamine (a trade name: JEFFAMINE (registered trademark) XTJ-542, manufactured by Huntsman Corporation, USA) was added into the vessel while gradually raising the temperature of the inside of the vessel to 260°C, and the mixture was polymerized for about 2 hours, thereby obtaining a polyether polyamide B-3. ηr = 1.22, [COOH] = 75.28 μeq/g, [$NH_2$] = 83.28 μeq/g, Mn = 12,61.4, Tg = 12.9°C, Tch = 51.9°C, Tm = 198.8°C.

Example 1

The polyamide resin A-1 and the polyether polyamide B-1 were dry blended in a compounding ratio (% by mass) of A-1/B-1 of 90/10 and then melt kneaded at a cylinder temperature of 280°C by using a twin-screw extruder equipped with a screw having a kneading part composed of a kneading disc and having a diameter of 28 mm. a vacuum vent, and a strand die, thereby obtaining a polyamide resin composition.

The obtained polyamide resin composition was measured for the flexural modulus and the Charpy impact strength. Results are shown in Table 1.

Example 2

A polyamide resin composition was obtained in the same manner as that in Example 1, except that in Example 1, the compounding ratio (% by mass) of the polyamide resin A-1 and the polyether polyamide B-1 was changed to A-1/B-1 = 80/20, and then measured for the flexural modulus and the Charpy impact strength. Results are shown in Table 1.

Example 3

A polyamide resin composition was obtained in the same manner as that in Example 2, except that in Example 2, the polyether polyamide B-1 was changed to the polyether polyamide B-2, and then measured for the flexural modulus and the Charpy impact strength. Results are shown in Table 1.

Example 4

A polyamide resin composition was obtained in the same manner as that in Example 1, except that in Example 1, the polyether polyamide B-1 was changed to the polyether polyamide B-3, and then measured for the flexural modulus and the Charpy impact strength. Results are shown in Table 1.

Comparative Example 1

A polyamide resin was obtained in the same manner as that in Example 1, except that in Example 1, the polyether polyamide B-1 was not used, and then measured for the flexural modulus and the Charpy impact strength. Results are shown in Table 1.

Comparative Example 2

A polyamide resin composition was obtained in the same manner as that in Example 1, except that in Example 1, the polyether polyamide B-1 was changed to a maleic anhydride-modified ethylene-propylene copolymer (a trade name: "TAFMER MP-0610", manufactured by Mitsui Chemicals, Inc.), and then measured for the flexural modulus and the Charpy impact strength. Results are shown in Table 1.

Table 1

| | | | Example | | | | Comparative Example | |
|---|---|---|---|---|---|---|---|---|
| | | | 1 | 2 | 3 | 4 | 1 | 2 |
| Polyamide resin (A) | | | A-1 | A-1 | A-1 | A-1 | A-1 | A-1 |
| Diamine (molar ratio) | (a-1) | Xylylenediamine | 100 | 100 | 100 | 100 | 100 | 100 |
| | | MXDA/PXDA molar ratio | 70/30 | 70/30 | 70/30 | 70/30 | 70/30 | 70/30 |

(continued)

| | | | Example | | | | Comparative Example | |
|---|---|---|---|---|---|---|---|---|
| | | | 1 | 2 | 3 | 4 | 1 | 2 |
| Dicarboxylic acid (molar ratio) | (a-2) | Adipic acid | 100 | 100 | 100 | 100 | 100 | 100 |
| | | Sebacic acid | 0 | 0 | 0 | 0 | 0 | 0 |
| Compounding amount (% by mass) | | | 90 | 80 | 80 | 90 | 100 | 90 |
| Polyether polyamide (B) | | | B-1 | B-1 | B-2 | B-3 | - | MP-0610 |
| Diamine (molar ratio) | (b-1) | XTJ-542 | 0 | 0 | 10 | 20 | | |
| | | ED-900 | 10 | 10 | 0 | 0 | | |
| | (b-2) | Xylylenediamine | 90 | 90 | 90 | 80 | | |
| | | MXDA/PXDA molar ratio | 70/30 | 70/30 | 70/30 | 70/30 | | |
| Dicarboxylic acid (molar ratio) | (b-3) | Adipic acid | 0 | 0 | 0 | 0 | | |
| | | Sebacic acid | 100 | 100 | 100 | 100 | | |
| Compounding amount (% by mass) | | | 10 | 20 | 20 | 10 | 0 | 10 |
| Flexural modulus (MPa) | | | 3900 | 3432 | 3502 | 3705 | 4266 | 3190 |
| Evaluation | | | A | B | A | A | A | C |
| Charpy impact strength (kJ/$m^2$) | | | 78 | 116 | 159 | 91 | 44 | 164 |
| Evaluation | | | B | A | A | A | C | A |

MXDA: m-Yylylenediamine
PXDA: p-Xylylenediamine
XTJ-542: Polyether diamine (manufactured by Huntsman Corporation)
ED-900: Polyether diamine (manufactured by Huntsman Corporation)
MP-0610: Maleic anhydride-modified ethylene-propylene copolymer (manufactured by Mitsui Chemicals, Inc.)

It is understood from Comparative Example 1 that in the sole use of the polyamide resinA-1, though the flexural modulus is high, the impact resistance is not sufficient. It is understood from Comparative Example 2 that when the polyamide resin A-1 is compounded with the maleic anhydride-modified ethylene-propylene copolymer, though the impact resistance can be improved, the flexural modulus is greatly lowered.

On the other hand, it is understood that the polyamide resin compositions of Examples 1 to 4 have a high elastic modulus and also have excellent impact resistance.

Industrial Applicability

The polyamide resin composition and the molded article using the same according to the present invention have a high elastic modulus and also have excellent impact resistance, and are especially suitable for an injection molded article.

## Claims

**1.** A polyamide resin composition comprising
a polyamide resin (A) in which a diamine constituent unit thereof comprises a constituent unit derived from a xylylenediamine (a-1), and a dicarboxylic acid constituent unit thereof comprises a constituent unit derived from an $\alpha,\omega$-linear aliphatic dicarboxylic acid (a-2) having from 4 to 20 carbon atoms; and
a polyether polyamide (B) in which a diamine constituent unit thereof comprises constituent units derived from a polyether diamine compound (b-1) represented by the following general formula (1) and a xylylenediamine (b-2), and a dicarboxylic acid constituent unit thereof comprises a constituent unit derived from an $\alpha,\omega$-linear aliphatic dicarboxylic acid (b-3) having from 4 to 20 carbon atoms:

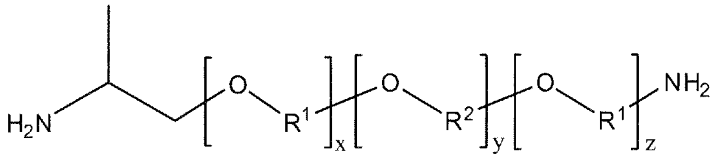 (1)

wherein (x + z) represents 1 to 60; y represents 1 to 50; each $-OR^1-$ independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.

**2.** The polyamide resin composition according to claim 1, having a flexural modulus, as measured in conformity with JIS K7171, of 3,300 MPa or more and a Charpy impact strength, as measured in conformity with ISO179-1 of 75 $kJ/m^2$ or more.

**3.** The polyamide resin composition according to claim 1 or 2, wherein a proportion of the constituent unit derived from the polyether diamine compound (b-1) in the diamine constituent unit of the polyether polyamide (B) is 1 to 50% by mole.

**4.** The polyamide resin composition according to any one of claims 1 to 3, comprising 5 to 50% by mole of the polyether polyamide (B) in the polyamide resin composition.

**5.** The polyamide resin composition according to any one of claims 1 to 4, wherein the xylylenediamine (b-2) is m-xylylenediamine, p-xylylenediamine, or a mixture thereof, and the $\alpha,\omega$-linear aliphatic dicarboxylic acid (b-3) is adipic acid, sebacic acid, or a mixture thereof.

**6.** The polyamide resin composition according to any one of claims 1 to 5, wherein the xylylenediamine (a-1) is m-xylylenediamine, p-xylylenediamine, or a mixture thereof, and the $\alpha,\omega$-linear aliphatic dicarboxylic acid (a-2) is adipic acid, sebacic acid, or a mixture thereof.

**7.** A molded article using the polyamide resin composition according to any one of claims 1 to 6.

**INTERNATIONAL SEARCH REPORT**

International application No. PCT/JP2014/058366

A. CLASSIFICATION OF SUBJECT MATTER
*C08L77/06*(2006.01)i

According to International Patent Classification (IPC) or to both national classification and IPC

B. FIELDS SEARCHED

Minimum documentation searched (classification system followed by classification symbols)
C08L77

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2012/111636 A1 (Mitsubishi Gas Chemical Co., Inc.), 23 August 2012 (23.08.2012), claims; paragraphs [0046], [0047]; examples & TW 201239005 A | 1,3,5-7<br>1-7 |
| Y | JP 2000-168010 A (Mitsubishi Gas Chemical Co., Inc.), 20 June 2000 (20.06.2000), claims; paragraphs [0003], [0005] (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 June, 2014 (13.06.14) | 01 July, 2014 (01.07.14) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2014/058366

C (Continuation). DOCUMENTS CONSIDERED TO BE RELEVANT

| Category* | Citation of document, with indication, where appropriate, of the relevant passages | Relevant to claim No. |
|---|---|---|
| A | JP 4-227959 A (Mitsubishi Gas Chemical Co., Inc.), 18 August 1992 (18.08.1992), claims & US 5147944 A & EP 458470 A1 & DE 69116600 C | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06045748 B